# FASCICULE DE BREVET EUROPEEN

(11) **EP 2 198 198 B1**
(45) Date de publication et mention de la délivrance du brevet: **06.06.2012**
(21) Numéro de dépôt: 08807053.7
(22) Date de dépôt: 12.09.2008
(51) Int. Cl.: F21S 10/00, G09F 13/18, G09F 13/22, G09F 19/12, G02B 6/00

(54) **DISPOSITIF ET PROCEDE D'ECLAIRAGE**
BELEUCHTUNGSEINRICHTUNG UND VERFAHREN
LIGHTING DEVICE AND METHOD

(30) Priorité: 12.09.2007 FR 0706397
(43) Date de publication de la demande: 23.06.2010
(73) Titulaire: Luo, David, 69680 Chassieu (FR)
(72) Inventeur: Luo, David, 69680 Chassieu (FR)
(86) Numéro de dépôt international: PCT/IB2008/002366
(87) Numéro de publication internationale: WO 2009/034451

(56) Documents cités:
- WO-A-2004/097773
- WO-A-2006/115031
- DE-A1- 3 235 752
- FR-A- 2 863 724
- US-A1- 2003 046 842

## Description

La présente invention vise un dispositif et un procédé de rétro-éclairage et un dispositif d'éclairage le mettant en oeuvre. Elle s'applique, en particulier, aux systèmes d'affichage multiple ou alternatif sur une même surface.

Les systèmes d'affichage émissifs du type de panneaux d'information, d'indication ou de boutons indicateurs affichent souvent des messages qui occupent seulement partiellement leurs surfaces, alors que leurs systèmes de rétro-éclairage proposent en générale un éclairage uniforme sur toute la surface, y compris des parties en d'hors des messages. L'éclairage inutile de ces parties constitue une pure perte électrique du système et, par conséquent, nuit au rendement du système de rétro-éclairage.

Dans le cas particulier des systèmes d'affichage de messages alternatifs et multiples, où plusieurs messages sont affichés individuellement et alternativement sur une même zone, il faut plusieurs systèmes d'éclairage ou guides d'ondes pilotés par plusieurs sources de lumière, pour permettre un éclairage alternatif. Ces solutions sont loin d'être optimales.

La présente invention vise à remédier à ces inconvénients.

A cet effet, la présente invention vise, selon un premier aspect, un dispositif d'éclairage qui comporte :
- un guide d'onde composé d'un substrat transparent ou translucide et d'au moins deux zones de réflexion à fonctions de réflexion différentes, sur le dos du substrat,
- une source de lumière adaptée à éclairer latéralement le guide d'onde. Les rayons lumineux émis se propagent à l'intérieur du substrat jusqu'aux zones de réflexion. En fonction de leurs fonctions de réflexion, ces dites zones réfléchissent une partie variable des ces rayons lumineux, en dehors du substrat, formant des zones d'éclairage sur la face du guide.
- un moyen de modulation d'au moins une caractéristique physique de ladite source de lumière, de telle manière qu'à chaque valeur de caractéristique physique modulée par le moyen de modulation, au moins une zone d'éclairage du dispositif change d'intensité.

Le document US 2003/0046842 A1, par exemple, décrit un tel dispositif.

Grâce à ces dispositions, lorsque la source de lumière est éteinte, le dispositif d'éclairage n'a aucune zone éclairée. Pour éclaireur certaines zones, on module la caractéristique de la source de lumière pour que cette caractéristique corresponde à la forte capacité de réflexion de ces zones et à la très faible capacité de réflexion des autres zones. Ces zones à forte capacité de réflexion réfléchissent les rayons lumineux pour former des zones d'éclairage. Les autres zones réfléchissent très peu de ces rayons lumineux et ne génèrent pas assez de lumière pour former des zones d'éclairage, facilement visibles par l'oeil humain sur le guide d'onde. Ainsi, en sélectionnant la modulation de la caractéristique de lumière émise, on rend visibles certaines zones et invisibles d'autres zones sur la face du dispositif.

Selon des caractéristiques particulières, le dispositif tel que succinctement exposé ci-dessus comporte au moins un réflecteur, placé sur le dos du substrat, après les zones de réflexion et sur les bords du substrat.

Selon des caractéristiques particulières, le dispositif tel que succinctement exposé ci-dessus comporte au moins un réflecteur, placé sur la face en dehors des zones d'éclairage.

Grâce à ces dispositions, le dispositif optimise le rendement en renvoyant dans le guide tous les rayons échappés du guide, en dehors des zones d'éclairage.

Selon des caractéristiques particulières, le dispositif tel que succinctement exposé ci-dessus comporte au moins un filtre optique à fonction transmissive, placée sur la face du substrat, superposé sur les zones d'affichage.

Selon des caractéristiques particulières, au moins un filtre optique transmissif couvre partiellement une zone d'éclairage, de telle manière que l'intensité d'éclairage à l'intérieur de la zone d'éclairage peut se trouver variée.

Grâce à ces dispositions, le dispositif peut raffiner les intensités des zones d'éclairage totalement ou partiellement, en fonction de la nature et de la forme du filtre transmissif.

Selon l'invention; les zones de réflexion et les filtres optiques transmissifs sont constitués d'une encre déposée directement sur le substrat.

Grâce à ces dispositions, les zones de réflexion et les filtres optiques du dispositif peuvent être fabriqués facilement par des moyens d'impression.

Selon des caractéristiques particulières, les zones de réflexion et les filtres optiques transmissifs sont réalisées par dépôt de couches minces organiques sur le substrat.

Selon des caractéristiques particulières, les zones de réflexion et les filtres optiques transmissifs sont réalisés par des formes géographiques sur le substrat.

Grâce à ces dispositions, d'autres méthodes de fabrication peuvent être utilisés, par exemple des gravures lasers.

Selon l'invention, le moyen de modulation est adapté à faire varier la bande spectrale lumineuse qui parvient aux dits zones de réflexion, dites zones de réflexion présentant des bandes spectrales de réflexion différentes.

Grâce à ces dispositions, lorsque le moyen de modulation fait varier la bande spectrale des rayons lumineux qui atteignent les zones de réflexion, celles-ci prennent des apparences visuelles différentes, formant des zones d'éclairage colorées et à intensité variée.

Selon des caractéristiques particulières, le moyen de modulation est adapté à faire varier un axe de polarisation principal des rayons lumineux atteignant les dites zones de réflexion, les dites zones de réflexion présentant des réflexions différentes selon les axes de polarisation.

Grâce à ces dispositions, les différentes zones d'éclairage sont éclairées par les mêmes couleurs.

Selon un deuxième aspect, la présente invention vise un dispositif d'éclairage qui comporte :
- au moins deux zones de réflexion à fonction de réflexion différente sur un support,
- une source de lumière adaptée à éclairer frontalement le support, les rayons réfléchis par les zones de réflexion formant des zones d'éclairage sur le support à intensité variée.
- un moyen de modulation d'au moins une caractéristique physique de ladite source de lumière, de telle manière qu'à chaque valeur de caractéristique physique modulée par le moyen de modulation, au moins une zone d'éclairage du dispositif change d'intensité.

Grâce à ces dispositions, on utilise l'éclairage directe des zones de réflexion pour formuler des zones d'éclairage sur la surface d'un quelconque support. Ainsi, en sélectionnant la modulation de la caractéristique de lumière émise, on rend visibles certaines zones et invisibles d'autres zones sur la face du support.

Selon un troisième aspect, la présente invention vise un dispositif d'éclairage qui comporte :
- une face avant contenant au moins un message à afficher,
- un guide d'onde composé d'un substrat transparent ou translucide et contenant au moins une zone de réflexion sur le dos du substrat, la zone de réflexion ayant la même forme que le message de la dite face avant,
- une source de lumière adaptée à éclairer latéralement le guide d'onde. Les rayons lumineux émis se propagent à l'intérieur du substrat jusqu'aux zones de réflexion. Ces dites zones réfléchissent une partie variable des ces rayons lumineux, en dehors du substrat, formant des zones d'éclairage correspondant géographiquement au message à afficher sur la face avant.

Grâce à ces dispositions, le dispositif propose uniquement des zones d'éclairage correspondant au message à afficher, couvrant partiellement le guide d'onde, et optimise ainsi le rendement électrique du dispositif.

Grâce à ces dispositions, le message éclairé et affiché sur le dispositif est caractérisé par un meilleur contraste, conséquence d'un fond de message plus foncé se trouvant sur une zone non éclairée.

La présente invention vise également un dispositif électronique possédant au moins une des fonctions suivantes : un assistant numérique personnel, un organiseur, un téléphone, une console de jeux, un ordinateur portable, un terminal d'accès à Internet, un distributeur automatique de billets, un tableau de bord, une montre, une télécommande, un baladeur, un système de positionnement, un récepteur de signaux audiovisuels, un équipement électronique, bureautique ou de loisir, un télécopieur, un photocopieur, un scanneur, un lecteur de supports enregistrés, une installation de domotique, un appareil électroménager, un équipement médical, un appareil de mesure, un automate d'analyse, un équipement automobile, un panneau d'indication, un interrupteur, un dispositif de jeux, un élément de décoration, une lampe, un bouton électrique, un panneau d'affichage, un dispositif électronique comportant un dispositif d'éclairage tel que succinctement exposé ci-dessus.

D'autres avantages, buts et caractéristiques de la présente invention ressortiront de la description qui va suivre, faite dans un but explicatif et nullement limitatif, en regard des dessins annexés dans lesquels :
- la figure 1 représente, schématiquement, en coupe, un premier mode de réalisation d'un dispositif d'éclairage de la présente invention ;
- la figure 2 représente, schématiquement, en vue de dessus, le dispositif d'éclairage illustré en figure 1 ;
- la figure 3 représente des courbes de réflexion et des spectres d'émission de la source de lumière dans le dispositif d'éclairage illustré en figures 1 et 2 ;
- la figure 4 représente, schématiquement, en coupe, une variante du premier mode de réalisation d'un dispositif d'éclairage selon la présente invention ;
- la figure 5 représente, schématiquement, en coupe, un deuxième mode de réalisation d'un dispositif d'éclairage de la présente invention ;
- la figure 6, représente, schématiquement, en vue de dessus, le dispositif d'éclairage illustré en figure 5 ;
- la figure 7 représente des courbes de réflexion et des spectres d'émission de la source de lumière dans le dispositif d'éclairage illustré en figures 5 et 6 ;
- la figure 8, représente, schématiquement, en vue de dessus, une variante du deuxième mode de réalisation d'un dispositif d'éclairage de la présente invention;
- la figure 9 représente, schématiquement, en coupe, un troisième mode de réalisation d'un dispositif d'éclairage selon la présente invention ;
- la figure 10, représente, schématiquement, en vue de dessus, le dispositif d'éclairage illustré en figure 8.

Dans toute la description, on utilise substrat pour désigner un matériel sous toutes les formes, transparent ou translucide; rigide ou flexible, ayant un indice de réfraction supérieur à celui du support extérieur frontalier, par exemple, l'air, permettant d'emprisonner lumière injecté sur le coté à l'intérieur du matériel, grâce à la réflexion des rayons arrivé sur les parois du matériel et voir à la réflexion total pour les rayons avec un angle incidence inférieur à l'angle critique. Plusieurs matériels peuvent être utilisés pour la réalisation du substrat comme, par exemple du Polycarbonate, polyméthacrylate de méthyle (PMMA), Polystyrène, polyéthylène téréphtalate, polyester, transparent silicone.

Dans toute la description, on décrit des sources de lumière comportant une ou plusieurs diodes électroluminescentes. Cependant, la présente invention ne se limite pas à ce type de transducteur électro-optique, mais couvre tous les types de source de lumière, dont par exemple des diodes électroluminescentes organiques (ou « oled »), des diodes lasers, des ampoules à incandescence ou des ampoules dites « fluo ».

Dans toute la description, on utilise « message » ou « symbole » pour désigner une forme visible intelligible. Par exemple, des lettres, des chiffres, des caractères, des mots, des photos, des graphiques, des logos, des icônes ou d'autres graphismes sont, au sens de la présente invention, des messages ou des symboles.

On appelle zone de réflexion une surface qui retourne, du côté d'où provient la lumière, une partie de rayons en fonction de la fonction de réflexion.

La présente invention peut être appliquée sur tous les panneaux ou systèmes d'affichage, d'information, d'indication, de signalisation ou publicitaire ; de plus, elle s'applique à toutes les touches et à tous systèmes de commandes, de saisie ou de contrôle.

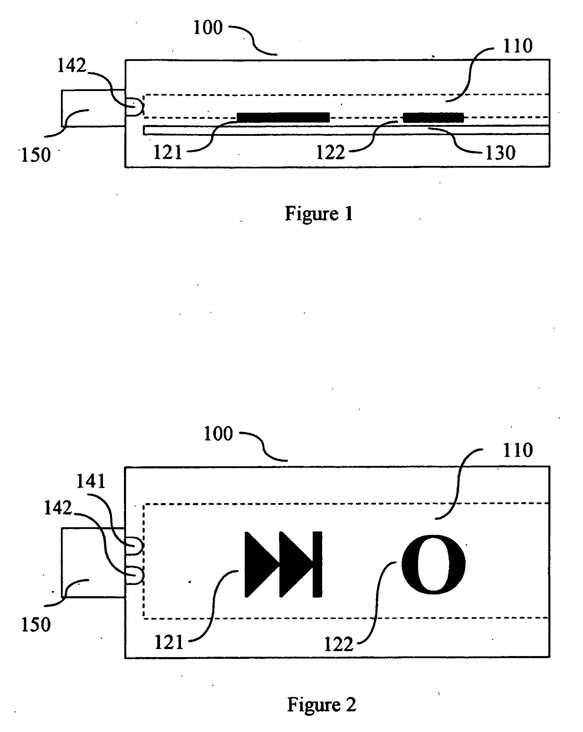

Dans le premier mode de réalisation, illustré par les figures 1 à 3, on utilise des filtres réflectifs chromatiques ou polarisant pour former différentes zones indépendantes de réflexion sur le dos du substrat. Pour faire apparaître des zones d'éclairage, on module respectivement la bande spectrale d'émission ou la direction de polarisation d'une source de lumière.

On observe, en figures 1 et 2, un dispositif d'éclairage 100 comportant un substrat transparent ou translucide 110, muni de deux zones de réflexion 121 et 122. Un réflecteur 130 se trouve après le substrat et les zones de réflexion. Une source de lumière est constituée de deux diodes électroluminescentes 141 et 142 commandées par un moyen de modulation 150.

Le substrat transparent 110 possède un indice supérieur à celui de l'air, de telle manière que la lumière injectée latéralement dans le substrat se propage à l'intérieur du substrat.

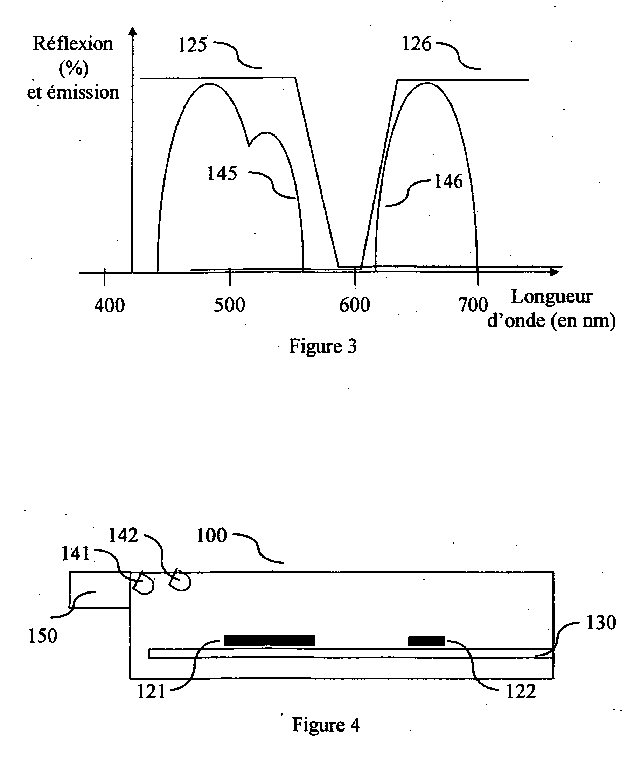

Les diodes électroluminescentes 141 et 142 émettent dans des bandes spectrales différentes, préférentiellement disjointes. Par exemple, la diode électroluminescente 141 émet des rayons lumineux 145 dont les longueurs d'onde se trouvent entre 450 et 560 nanomètres et la diode électroluminescente 142 émet des rayons lumineux 146 dont les longueurs d'onde se trouvent entre 600 et 700 nanomètres, tel que montré par la figure 3.

Les zones de réflexion 121 à 122 se trouvent sur le dos du substrat sur le chemin optique des rayons lumineux issus des diodes électroluminescentes 141 et 142. Les zones 121 et 122 sont formées de symboles différents, par exemple « L » et « O », les zones 121 et 122 possèdent respectivement des courbes de réflexion 125 et 126, tel que montré par la figure 3. La zone 121 reflète les rayons lumineux ayant des longueurs d'onde entre 450 et 560 nanomètres, émise par la diode électroluminescente 141 et absorbe les rayons des longueurs d'onde supérieures à 600 nanomètres, émis par la diode électroluminescente 142. Inversement, la zone 122 reflète les rayons des longueurs d'onde supérieures à 600 nanomètres, émis par la diode électroluminescente 142 et absorbe les rayons lumineux ayant des longueurs d'onde entre 450 et 560 nanomètres, émis par la diode électroluminescente 141.

Le réflecteur 130, situé après le substrat et des zones de réflexion, renvoie vers le substrat tous les rayons échappés du substrat et des zones de réflexion.

Lorsque le moyen de modulation 150 ne commande aucune diode électroluminescente, aucune zone n'est éclairée.

Lorsque le moyen de modulation 150 commande l'allumage de la diode électroluminescente 141, la diode envoie des rayons lumineux de longueurs d'onde entre 450 et 560 nanomètres dans le substrat 110 jusqu'aux zones de réflexion 121 et 122. La zone 121 renvoie une partie des rayons en direction perpendiculaire et en dehors du substrat alors que la zone 122 ne renvoie très peu voir pas de lumière en dehors du substrat. Les rayons renvoyés forment une zone d'éclairage visible sous une certaine forme, ici « L ». Ainsi, sur la surface du substrat, une seule zone d'éclairage apparaît sous forme de « L », en couleur, cyan, par exemple.

Lorsque le moyen de modulation 150 commande l'allumage de la diode électroluminescente 142, la diode envoie des rayons lumineux de longueurs d'onde entre 600 et 700 nanomètres dans le substrat 110 jusqu'aux zones de réflexion 121 et 122. La zone 121 ne renvoie très peu, voir pas de lumière en dehors du substrat alors que la zone 122 renvoie une partie des rayons dans la direction perpendiculaire et en dehors du substrat. Les rayons renvoyés forment une zone d'éclairage visible sous une certaine forme , ici « O ». Ainsi, sur la surface du substrat, une seule zone d'éclairage apparaît sous forme de « O », en couleur, rouge, par exemple.

Lorsque le moyen de modulation 150 commande les allumages des deux diodes électroluminescentes 141, et 142, deux zones d'éclairage sont visibles sur la surface du substrat, ici sous formes de « L » et « O », en couleurs respectives cyan et rouge; par exemple.

Ainsi, grâce à ces dispositions, par la modulation d'une caractéristique physique de la lumière émise par la source de lumière, ici la longueur d'onde des rayons émis, on fait apparaître, sur la surface du dispositif d'éclairage 100, soit une zone, soit une autre zone, soit les deux zones.

En variante du premier mode de réalisation, illustré en figures 1 et 2, la source de lumière comporte une diode électroluminescente dont le spectre de longueur d'ondes d'émission dépend d'au moins une caractéristique électrique du signal qui lui est appliqué, par exemple la tension.

En variante du premier mode de réalisation, illustré en figures 1 et 2, la source de lumière comporte deux diodes électroluminescentes émettant dans le même spectre visible, associées, chacune, à un filtre chromatique.

En variante du premier mode de réalisation, illustré en figures 1 et 2, la source de lumière comporte deux diodes électroluminescentes, chacune suivie d'un filtre polarisant linéaire. Ces filtres polarisants sont perpendiculaires. Ainsi, les rayons envoyés par ces deux diodes électroluminescentes sont polarisés linéairement et perpendiculairement entre eux.

En variante du premier mode de réalisation, illustré en figure 4, le dispositif ne comporte pas de substrat pour guider la source de lumière. Situées sur le coté opposé des zones de réflexion, les deux diodes électroluminescentes éclairent directement les zones de réflexion.

Ainsi, grâce à ces dispositions, par la modulation d'une caractéristique physique de la lumière émise par la source de lumière, ici la longueur d'onde des rayons émis, on fait apparaître, sur la surface du dispositif d'éclairage 100, soit une zone, soit une autre zone , soit les deux zones.

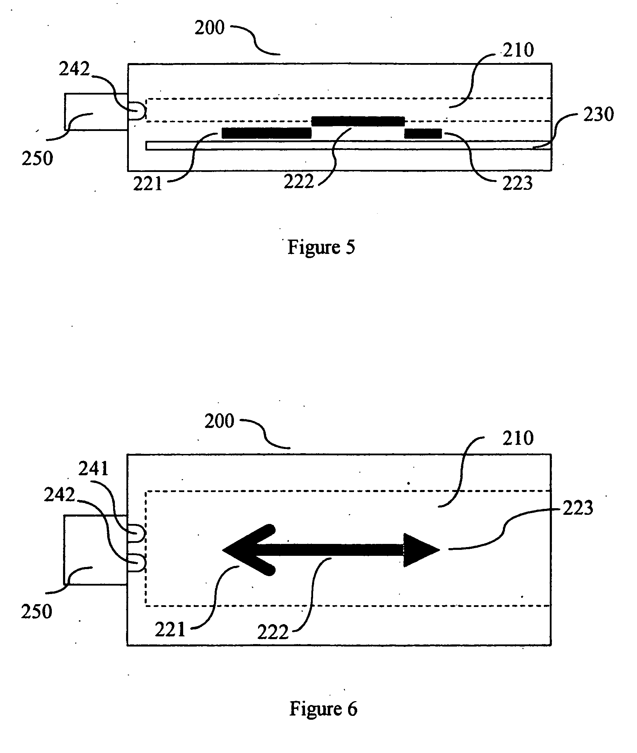

Dans le deuxième mode de réalisation, illustré par les figures 5 à 8, on utilise des zones de réflexion dont la fonction de réflexion est indépendante de la modulation différente de la source de lumière. On peut ainsi faire apparaître des combinaisons de zones d'éclairage.

On observe, en figures 5 et 6, un dispositif d'éclairage 200 comportant un substrat transparent 210, muni de trois zones de réflexion 221, 222 et 223. Un réflecteur 230 se trouve après le substrat et les zones de réflexion. Une source de lumière est constituée de deux diodes électroluminescentes 241 et 242 commandées par un moyen de modulation 250.

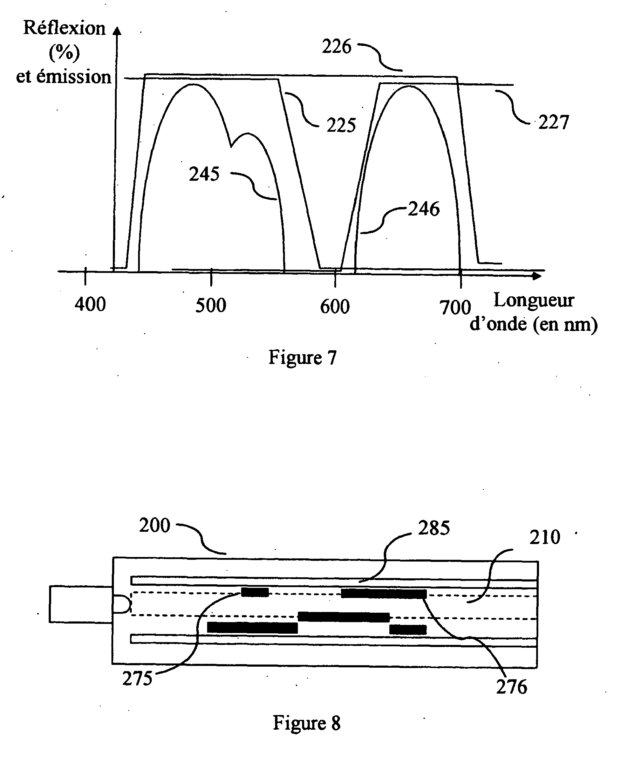

Les diodes électroluminescentes 241 et 242 émettent dans des bandes spectrales différentes, préférentiellement disjointes. Par exemple, la diode électroluminescente 241 émet des rayons lumineux 245 dont les longueurs d'onde se trouvent entre 450 et 560 nanomètres et la diode électroluminescente 242 émet des rayons lumineux 246 dont les longueurs d'onde se trouvent entre 600 et 700 nanomètres, tel que montré par la figure 7.

Les zones de réflexion 221, 222 et 223 se trouvent sur le dos du substrat sur le chemin optique des rayons lumineux issus des diodes électroluminescentes 241 et 242. Les zones 221, 222 et 223 sont formées de symboles, ici respectivement « L », «-» et « L », et possèdent respectivement des courbes de réflexion 225, 226 et 227, tel que montré par la figure 7. La zone 221 reflète les rayons lumineux à longueurs d'onde entre 450 et 560 nanomètres, émise par la diode électroluminescente 241 et absorbe les rayons lumineux à longueurs d'onde supérieures à 600 nanomètres, émis par la diode électroluminescente 242. Inversement, la zone 223 reflète les rayons lumineux à longueurs d'onde supérieures à 600 nanomètres, émis par la diode électroluminescente 242 et absorbe les rayons lumineux à longueurs d'onde entre 450 et 560 nanomètres, émis par la diode électroluminescente 241. La zone 222 reflète tous les rayons des longueurs d'onde entre 450 et 700 nanomètres, émis par les deux diodes électroluminescentes 241 et 242.

Le réflecteur 230, situé après le substrat et des zones de réflexion, renvoie vers le substrat tous les rayons échappés du substrat et des zones de réflexion.

Lorsque le moyen de modulation 250 ne commande aucune diode électroluminescente, aucune zone n'est éclairée sur la surface du substrat,

Lorsque le moyen de modulation 250 commande l'allumage de la diode électroluminescente 241, la diode envoie des rayons lumineux de longueurs d'onde entre 450 et 560 nanomètres dans le substrat 210 jusqu'aux zones de réflexion 221, 222 et 223. Les zones 221 et 222 renvoient une partie des rayons en direction perpendiculaire et en dehors du substrat alors que la zone 223 ne renvoie très peu voir pas de lumière en dehors du substrat. Les rayons renvoyés forment une combinaison de zones d'éclairage visible sous une certaine forme, ici une flèche gauche avec un grande trait, «L-». Ainsi, sur la surface du substrat, une combinaison de zones d'éclairage apparaît sous une seule forme de «L-», en couleur, cyan, par exemple.

Lorsque le moyen de modulation 250 commande l'allumage de la diode électroluminescente 242, la diode envoie des rayons lumineux de longueurs d'onde entre 600 et 700 nanomètres dans le substrat 210 jusqu'aux zones de réflexion 221, 222 et 223. La zone 221 ne renvoie très peu, voir pas de lumière en dehors du substrat alors que les zones 222 et 223 renvoient une partie des rayons dans la direction perpendiculaire et en dehors du substrat. Les rayons renvoyés forment une seconde combinaison de zones d'éclairage visible sous forme d'une flèche droite « -L ». Ainsi, sur la surface du substrat, une autre combinaison de zone d'éclairage apparaît sous forme de « -L », en couleur, rouge, par exemple.

Lorsque le moyen de modulation 250 commande les allumages des deux diodes électroluminescentes 241, et 242, trois zones d'éclairage sont visibles sur la surface du substrat, sous formes de « L », « - » et «L», en couleurs, par exemple ici respectivement cyan, blanc et rouge, le blanc étant le mélange de cyan et rouge.

Ainsi, grâce à ces dispositions, par la modulation d'une caractéristique physique de la lumière émise par la source de lumière, ici la longueur d'onde des rayons émis, on fait apparaître, sur la surface du dispositif d'éclairage 200, soit une combinaison des zones, soit une autre combinaison des zones. Ces deux zones combinées peuvent se chevaucher partiellement.

En variante du deuxième mode de réalisation, illustré en figure 8, le dispositif 200 est muni des filtres transmissifs 275 et 276, situés sur la face du substrat. Chaque filtre possède une fonction de transmission laissant passer la lumière de certaines longueurs d'onde et interceptant la lumière d'autres longueurs d'onde.

En variante du deuxième mode de réalisation, illustré en figure 8, le dispositif 200 est muni d'un filtre transmissif 285, situé sur la face du substrat, couvrant entièrement les zones de réflexion. Le filtre possède une fonction de transmission laissant passer la lumière de certaines longueurs d'onde et interceptant la lumière d'autres longueurs d'onde.

Ainsi, grâce à ces dispositions, le dispositif filtrant les rayons envoyés par les zones de réflexion, propose des zones d'éclairage résultant des zones transmissives et réflectives.

On observe ici que les filtres transmissifs sur le substrat peuvent prendre toutes les formes possibles, en particulier les mêmes formes que celles des zones de réflexion.

Dans le cas où les filtres transmissifs sont réalisés selon l'invention du brevet publié sous le numéro WO2005078563, la présente invention propose un meilleur contraste des messages éclairés que dans le cas d'un dispositif de rétro éclairage classique et uniforme.

On observe ici que les filtres transmissifs ne se limitent pas uniquement aux filtres chromatiques, elles peuvent être des filtres polarisants laissant passer de la lumière d'une direction de polarisation et interceptant une autre direction de polarisation, ou des filtres diffuseurs qui proposent une fonction de transmission uniforme sur toutes les longueurs d'onde.

Ainsi, grâce à ces dispositions, le dispositif filtre les rayons envoyés par les zones de réflexion, et propose des zones d'éclairage résultant des zones transmissives et réflexives.

On observe que les filtres transmissifs peuvent être des diffuseurs qui proposent une fonction de transmission uniforme sur toutes les longueurs d'onde.

On observe dans toutes les réalisations que les zones de réflexion et les filtres transmissifs se trouvant sur le substrat peuvent être réalisés par un dépôt d'encres, par des moyens d'impression.

On observe dans toutes les réalisations que les zones de réflexion et les filtres transmissifs se trouvant sur le substrat peuvent être réalisés par des méthodes de dépôt de couches minces.

On observe dans toutes les réalisations que les zones de réflexion sur le substrat peuvent être réalisées par l'apport d'un réflecteur extérieur indépendant, placé sur le dos du substrat.

On observe dans toutes les réalisations que le nombre de zones de réflexion sur le substrat n'est pas limité à deux mais peut atteindre un nombre supérieur, par exemple dix. Parmi ces zones de réflexion, au moins une a une fonction de réflexion différente de celles des autres.

On observe dans toutes les réalisations que le nombre de filtres transmissifs sur le substrat n'est pas limité à deux mais peut atteindre un nombre supérieur, par exemple dix.

On observe dans toutes les réalisations que le nombre de diodes életroluminescentes n'est pas limité à deux mais peut atteindre le nombre de bandes spectrales différentes que la source de lumière peut avoir, par exemple dix, si des bandes spectrales disjointes couvrent chacune une largeur de spectre de trente nanomètres.

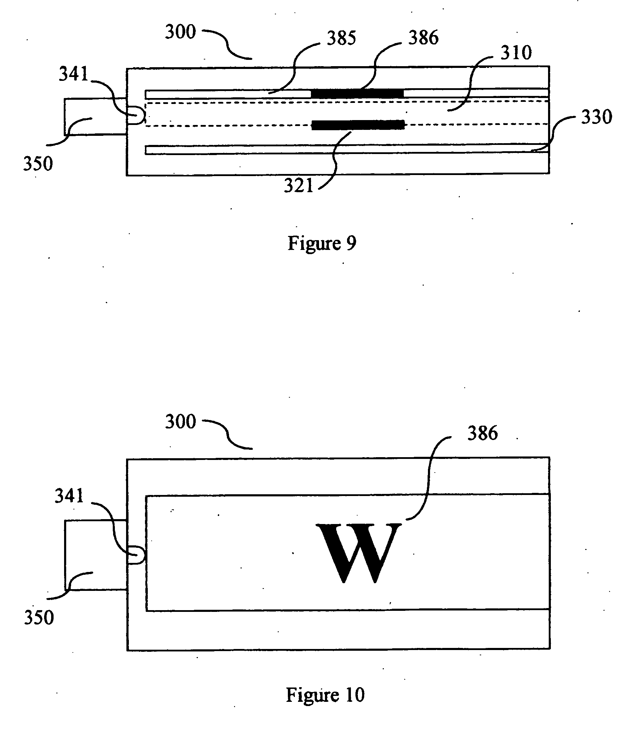

Dans le troisième mode de réalisation, illustré par les figures 9 et 10, on utilise un filtre transmissif chromatique ou polarisant formant, positif ou négatif, des zones géographiques correspondantes à celles des zones de réflexion. On peut ainsi faire apparaître des zones d'éclairage résultant des combinaisons des formes du filtre transmissif et de la zone de réflexion correspondante, par exemple, l'intersection des formes.

On observe, en figures 9 et 10, un dispositif d'éclairage 300 comportant un substrat transparent 310, un filtre transmissif 385 et une zone de réflexion 321. Un réflecteur 330 se trouve après le substrat et les zones de réflexion. Une source de lumière est constituée d'une diode électroluminescente 341 commandée par un moyen de modulation 350.

Le substrat transparent 310 possède un indice supérieur à celui de l'air, de telle manière que la lumière injectée latéralement dans le substrat se propage à l'intérieur du substrat.

La diode électroluminescente 341 émet des rayons lumineux dont les longueurs d'onde se trouvent par exemple entre 450 et 560 nanomètres. Le filtre transmissif, situé sur la face du substrat, comporte une zone 386, en forme de « W ». Le filtre laisse passer tous les rayons émis par la diode électroluminescente 341 à l'intérieur de la zone 386 et intercepte tous les rayons en dehors de la zone. La zone de réflexion 321, également en forme de « W » se trouve sur le dos du substrat.

Lorsqu'on commande l'allumage de la diode électroluminescente, les rayons lumineux émis se propagent à l'intérieur du substrat jusqu'à la zone 121. Une partie des rayons est reflétée par cette zone à l'extérieur du substrat et traverse le filtre transmissif. En dehors de cette forme « W », le filtre transmissif intercepte tous les rayons échappés du substrat. Ainsi, sur le dispositif d'éclairage, la forme « W » est fortement visible, par exemple en cyan sur un fond noir.

Ainsi, grâce à ces dispositions, pour éclairer une forme particulière sur la face du dispositif, on envoie uniquement de la lumière dans la forme particulière et optimise ainsi le rendement du dispositif d'éclairage.

## Revendications

1. Dispositif d'affichage (300) présentant un substrat (310) transparent ou translucide qui présente une face avant (385), ainsi qu'au moins une zone de réflexion (321) en regard de cette face avant, ledit dispositif comportant une source (341) de lumière latérale, adaptée pour que les rayons lumineux que ladite source émet se propagent jusqu'à la zone de réflexion,
**caractérisé en ce que**:
- la zone de réflexion est constituée d'au moins une encre déposée directement sur le substrat.
- il comporte un moyen de modulation (350) de la source (341) de lumière, ledit moyen de modulation étant adapté pour faire varier la bande spectrale lumineuse des rayons qui sont émis et qui se propagent jusqu'à la zone de réflexion, telle(s) que selon la bande spectrale lumineuse commandé par le moyen de modulation, les rayons émis sont réfléchis ou non par la zone de réflexion à travers la face avant du substrat permettant ainsi de commander un affichage d'au moins un « message » ou « symbole » (386) ou l'absence de cet affichage .

2. Dispositif d'affichage selon la revendication 1, **caractérisé en ce qu'**il présente au moins deux zones de réflexion (121, 122) en regard de la face avant, les zones de réflexion étant constitués d'au moins une encre déposée directement sur le substrat, le moyen de modulation (150) étant adapté pour faire varier la bande spectrale lumineuse (145, 146) des rayons qui sont émis et qui se propagent jusqu'aux zones de réflexion, tandis que les zones de réflexion présentent des bandes spectrales (125, 126) de réflexion différentes,
la commande, par le moyen de modulation (150), de la bande spectrale des rayons émis étant réfléchis soit par une zone de réflexion, soit par une autre, soit par les deux, à travers la face avant du substrat pour réaliser des affichages multiples ou alternatifs de « message(s) » ou « symbole(s) ».

3. Dispositif selon la revendication 1, **caractérisé en ce que** le substrat forme un guide d'onde qui guide la lumière jusqu'à la ou aux zones de réflexion.

4. Dispositif selon la revendication 1, **caractérisé en ce que** la source de lumière (141, 142) éclaire directement la ou les zones de réflexion.

5. Dispositif selon l'une quelconque des revendications 1 à 4, **caractérisé en ce qu'**il comporte au moins un réflecteur (130) placé sur le dos du substrat.

6. Dispositif selon l'une quelconque des revendications 1 à 5, **caractérisé en ce qu'**il comporte au moins un filtre optique (285) à fonction transmissive, placée sur la face avant du substrat,

7. Dispositif selon la revendication 6, **caractérisé en ce qu'**au moins un filtre optique (275, 276) transmissif couvre partiellement une zone de réflexion, de telle manière que l'intensité d'éclairage au sein de la zone se trouve variée. 6

8. Dispositif selon l'une quelconque des revendications 6 à 7, **caractérisé en ce que** les filtres optiques transmissifs sont constitués d'au moins une encre déposée directement sur le substrat.

9. Dispositif d'affichage choisi parmi les panneaux ou systèmes d'affichage, d'information, d'indication, de signalisation, publicitaire, de commandes, de saisie ou de contrôle, **caractérisé en ce qu'**il comporte un dispositif selon l'une quelconque des revendications 1 à 8.

## Claims

1. Display device (300) with a transparent or translucent substrate (310) having a front face (385), and with at least one area of reflection (321) opposite to the front face, said device comprising a side light source (341), adapted so that the light rays emitted by said source are propagated up to the area of reflection, **characterized in that**:
- The area of reflection is composed of at least one ink deposited directly on the substrate;
- It has a modulation means (350) of the light source (341), said modulation means being adapted to vary the spectral light band of the rays that are emitted and that spread to the area of reflection, such that according to the spectral light band controlled by the modulation means, the rays are reflected or not by the area of reflection through the front face of the substrate, allowing thereby to control a display of at least a "message" or "symbol" (386) or the absence of this display.

2. Display device as claimed in claim 1, **characterized in that** it has at least two areas of reflection (121, 122) opposite to the front face, the areas of reflection consisting of at least one ink deposited directly on the substrate, the modulation means (150) being adapted to vary the spectral light band (145, 146) of the rays that are emitted and that spread up to the areas of reflection, whereas the areas of reflection have spectral bands (125, 126) of different reflection, the control, by the modulation means (150), of the spectral band of the emitted rays being reflected by an area of reflection, or by another, or by both areas of reflection, through the front face of the substrate to achieve multiple or alternative displays of "message(s)" or "symbol(s)".

3. Device as claimed in claim 1, **characterized in that** the substrate forms a waveguide that guides the light to the area or to the areas of reflection.

4. Device as claimed in claim 1, **characterized in that** the light source (141, 142) illuminates directly the area or the areas of reflection.

5. Device as claimed in any one of claim 1 to 4, **characterized in that** it comprises at least one reflector (130) placed on the back of the substrate.

6. Device as claimed in any one of claim 1 to 5, **characterized in that** it comprises at least one optical filter (285) with transmissive function, placed on the front face of the substrate.

7. Device as claimed in claim 6, **characterized in that** at least one optical filter (275, 276) with transmissive function covers partially an area of reflection, so that the light intensity within the area is varied.

8. Device as claimed in any one of claim 6 to 7, **characterized in that** the transmissive optical filters consist of at least one ink deposited directly on the substrate.

9. Display device selected from the panels or systems for display, information, indication, signalization, advertising, command, input or control, **characterized in that** it comprises a device as claimed in any one of claims 1 to 8.

## Patentansprüche

1. Anzeigevorrichtung (300) mit einem transparenten oder transluzenten Substrat (310), mit einer Frontseite (385), und mindestens einer reflektierenden Zone (321) gegenüber der Frontseite, wobei die Vorrichtung eine laterale Lichtquelle (341) beinhaltet, geeignet, die von der besagten Lichtquelle ausgehenden Lichtstrahlen bis zur reflektierenden Zone zu leiten,
**dadurch gekennzeichnet, dass**:
- die reflektierende Zone aus mindestens einer direkt auf dem Substrat angebrachten Tinte besteht;
- sie ein Modulationsmittel (350) der Lichtquelle (341) vorsieht, welches angepasst ist, das Lichtspektralband der abgegebenen, bis zur reflektierenden Zone propagierten Strahlen, zu variieren, so dass je nach dem durch das Modulationsmittel gesteuerte Lichtspektralband, die propagierten Strahlen von der reflektierenden Zone durch die Frontseite des Substrats reflektiert oder nicht reflektiert werden, und so das Steuern der Anzeige mindestens einer "Nachricht" oder eines "Symbols" (386) oder das Ausbleiben dieser Anzeige ermöglicht wird.

2. Anzeigevorrichtung nach Anspruch 1, **dadurch gekennzeichnet, dass** sie mindestens zwei reflektierende Zonen (121, 122) aufweist, gegenüber der Frontseite, und diese reflektierenden Zonen aus mindestens einer Tinte bestehen, die direkt auf dem Substrat aufgebracht ist, das Modulationsmittel (150) ist angepasst, das Lichtspektralband (145, 146) der propagierten, bis zu den reflektierenden Zonen propagierten Strahlen, zu variieren, während die reflektierenden Zonen Lichtspektralbänder (125, 126) mit verschiedener Reflektion vorweisen,
die Steuerung, durch das Modulationsmittel (150), des Spektralbandes der propagierten Strahlen, die entweder von einer oder einer anderen oder von den beiden reflektierenden Zonen reflektiert werden, durch die Frontseite des Substrats, um multiple oder alternative Anzeigen von "Nachricht(en)" oder "Symbol(en)" zu erzeugen.

3. Vorrichtung nach Anspruch 1, **dadurch gekennzeichnet, dass** das Substrat einen Wellenleiter bildet, der das Licht bis zu der oder den reflektierenden Zonen leitet.

4. Vorrichtung nach Anspruch 1, wobei die Lichtquelle (141, 142) die reflektierende(n) Zone(n) direkt beleuchtet.

5. Vorrichtung nach einem der Ansprüche 1 bis 4, **dadurch gekennzeichnet, dass** sie mindestens einen Reflektor (130) umfasst, auf der Rückseite des Substrats angebracht.

6. Vorrichtung nach einem der Ansprüche 1 bis 5, **dadurch gekennzeichnet, dass** sie mindestens einen optischen Filter (285) mit transmissiver Funktion umfasst, auf der Frontseite des Substrats angebracht.

7. Vorrichtung nach Anspruch 6, **dadurch gekennzeichnet dass** mindestens ein optischer Filter (275, 276) mit transmissiver Eigenschaft teilweise eine reflektierende Zone abdeckt, so dass die Intensität der Beleuchtung in der Zone variiert wird.

8. Vorrichtung nach einem der Ansprüche 6 bis 7, **dadurch gekennzeichnet dass** die transmissiven optischen Filter aus mindestens einer Tinte bestehen, die direkt auf dem Substrat angebracht ist.

9. Anzeigevorrichtung, ausgewählt unter Schildern oder Systemen für Display, Informationen, Hinweise, Signalisation, Werbung, Steuerung, Eingabe oder Kontrolle, **dadurch gekennzeichnet dass** sie eine Vorrichtung nach einem der Ansprüche 1 bis 8 enthält.
